(19) **Europäisches Patentamt / European Patent Office / Office européen des brevets**

(11) **EP 3 439 129 B1**

(12) **EUROPÄISCHE PATENTSCHRIFT**

(45) Veröffentlichungstag und Bekanntmachung des Hinweises auf die Patenterteilung:
**28.12.2022 Patentblatt 2022/52**

(21) Anmeldenummer: **18182444.2**

(22) Anmeldetag: **09.07.2018**

(51) Internationale Patentklassifikation (IPC):
**H02J 3/00** (2006.01)    **H02J 3/32** (2006.01)
**G05B 15/02** (2006.01)    **G06Q 50/06** (2012.01)

(52) Gemeinsame Patentklassifikation (CPC):
**H02J 3/00; G06Q 50/06; H02J 3/32;** H02J 2203/20;
Y02E 60/00; Y04S 40/20

(54) **DIMENSIONIERUNG EINES ENERGIESPEICHERS UND EINES WECHSELRICHTERS**

DIMENSIONING OF AN ENERGY STORAGE DEVICE AND AN INVERTER

DIMENSIONNEMENT D'UN ACCUMULATEUR D'ÉNERGIE ET D'UN ONDULEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.07.2017 DE 102017117216**

(43) Veröffentlichungstag der Anmeldung:
**06.02.2019 Patentblatt 2019/06**

(73) Patentinhaber: **GreenCom Networks AG**
**81669 München (DE)**

(72) Erfinder:
• **KRUPPA, Simon**
**44265 Dortmund (DE)**
• **KLAES, Marcel**
**45527 Hattingen (DE)**

(74) Vertreter: **Cohausz & Florack**
**Patent- & Rechtsanwälte**
**Partnerschaftsgesellschaft mbB**
**Bleichstraße 14**
**40211 Düsseldorf (DE)**

(56) Entgegenhaltungen:
**EP-A1- 2 610 986**

• **JANINA MOSHÖVEL ET AL: "Tool to Determine Economic Capacity Dimensioning in PV Battery Systems Considering Various Design Parameters", 30TH-31TH EUROPEAN PHOTOVOLTAIC SOLAR ENERGY CONFERENCE, PROCEEDINGS OF THE 30-31TH INTERNATIONAL CONFERENCE, 18. September 2015 (2015-09-18), XP055501603, DOI: 10.4229/EUPVSEC20152015-5BO.9.3 ISBN: 978-3-936338-39-3**

**Beschreibung**

**Gebiet der Erfindung**

Die Erfindung betrifft ein Verfahren und eine Vorrichtung zur Dimensionierung eines Energiespeichers, insbesondere betrifft die Erfindung ein Verfahren und eine Vorrichtung zum Bestimmen von einer Kapazitätsinformation zur Dimensionierung eines Energiespeichers.

**Hintergrund**

Photovoltaik, Windenergie, (Mikro-)KWK (Kraft-Wärme-Kopplung) oder dergleichen im Haushalt installierte Stromerzeugungsanlagen können zumindest einen Teil von einem Strombedarf des Haushalts decken. Insbesondere bei den sogenannten erneuerbaren Energien (z. B. Photovoltaik oder Windenergie) kann es zwischen der Erzeugung des Stroms und dem Verbrauch des erzeugten Stroms zu einer gewissen zeitlichen Verzögerung kommen. Um den erzeugten Strom später nutzen zu können, kann dieser in einem Energiespeicher gespeichert werden. Die Kapazität eines Energiespeichers wird in der Regel geschätzt. Hierbei wird beispielsweise der Energiespeicher anhand des jährlichen Stromverbrauchs des Haushalts und/oder der jährlichen Stromerzeugung der Stromerzeugungsanlage dimensioniert. Die maximale Erzeugungsleistung der Stromerzeugungsleistung ist oftmals bekannt. Die jährlich erzeugte Energiemenge der Stromerzeugungsanlage hingegen in der Regel nicht. Diese wird beispielsweise anhand der maximalen Erzeugungsleistung der Stromerzeugungsanlage und den regionalen Strahlungsdaten geschätzt. Dies kann mitunter zu einer unnötig großen Dimensionierung des Energiespeichers führen, denn insbesondere die jährlich erzeugte Energiemenge wird üblicherweise stark vereinfacht angenommen. Beispielsweise kann die mögliche Spitzenleistung einer Photovoltaikanlage nicht erreicht werden, z. B. wenn die zur Stromerzeugung nutzbare Fläche der Photovoltaikanlage durch örtliche Gegebenheiten (z. B. Schattenwurf von Hindernissen, wie etwa Bäumen oder hohen Gebäuden) nicht vollständig genutzt werden kann.

Hierdurch resultiert, dass ein Energiespeicher oftmals viel zu groß dimensioniert wird. Die Rentabilität von Energiespeichern in Haushalten wird entsprechend negativ beeinflusst.

Aus dem Dokument "Janina Moshövel et al; Tool to Determine Economic Capacity Dimensioning in PV Battery Systems Considering Various Design Parameters"; 30th-31th European Photovoltaic Solar Energy Conference, Proceedings of the 30-31th international Conference; 18. September 2015 (2015-09-18); DOI: 10.4229/EUPVSEC20152015-5BO.9.3; ISBN: 978-3-936338-39-3" sind photovoltaische (PV) Batteriespeichersysteme und deren Bestimmung einer wirtschaftlichsten Speicherkapazitätsgröße für einen Haushalt bekannt.

Es wird ein Werkzeug offenbart, das in der Lage ist, eine Berechnung der richtigen Batteriegröße für eine Vielzahl von verschiedenen Haushalts- und PV-Kombinationen zu bestimmen.

Aus der EP 2 610 986 A1 ist ein Verfahren zum Bestimmen der Wahrscheinlichkeit eines Stromausfalls eines elektrischen Gerätes in einem Stromnetz, insbesondere ein Smart Grid bekannt, wobei das Verfahren die folgenden Schritte umfasst:

- Unterteilen des Zeitraums in mehrere Zeitintervalle,
- Bestimmen einer Stromerzeugungskapazität und einer Größe der Energiespeichereinheit für den Zeitraum,
- Bestimmen einer effektiven Ladeeinheitenanforderung für jedes Zeitintervall aus einer Ladeeinheitenanforderung für jedes Zeitintervall, wobei der Bedarf an Ladeeinheiten für jedes Zeitintervall aus einer Datenbank ausgelesen oder durch Leistungsmessen erhalten wird, und
- Berechnen der Wahrscheinlichkeit eines Stromausfalls aus einem Netzwert, der die Stromerzeugungskapazität, die Energie und die Speichereinheitengröße und den effektiven Ladeeinheitenbedarf umfasst, wobei der Netzwert für seinen Maximalwert optimiert ist bezogen auf alle Zeitintervalle des Zeitraums durch einen Prozessor einer Datenverarbeitungseinheit.

Es wäre daher wünschenswert, die Dimensionierung des Energiespeichers an den tatsächlichen Bedarf eines Haushalts anzupassen.

**Allgemeine Beschreibung einiger beispielhafter Ausführungsformen**

Vor dem Hintergrund des dargestellten Standes der Technik ist es somit die Aufgabe, die beschriebenen Probleme zumindest teilweise zu verringern oder zu vermeiden, das heißt insbesondere eine Möglichkeit bereitzustellen, um einen Hinweis auf die tatsächlich benötigte Kapazität für einen Energiespeicher zu erhalten.

Diese Aufgabe wird gegenständlich durch ein Verfahren mit den Merkmalen des Anspruchs 1 gelöst.

Gemäß einem ersten Aspekt wird ein Verfahren beschrieben, durchgeführt von einer oder mehreren Vorrichtungen, das Verfahren umfassend:

- Erfassen von Erzeugungsinformationen indikativ für eine Menge von erzeugtem Strom, wobei der erzeugte Strom von einer Stromerzeugungsanlage erzeugt wird;
- Erfassen von Verbrauchsinformationen indikativ für eine Menge von verbrauchtem Strom, wobei der Strom von einem Haushalt verbraucht wird;
- Bestimmen von einer Kapazitätsinformation indikativ für eine Dimensionierung eines Energiespeichers, wobei die Kapazitätsinformation zumindest teilweise basierend auf den erfassten Erzeugungsinformationen und auf den erfassten Verbrauchsinformationen bestimmt wird; und
- Ausgeben oder Veranlassen des Ausgebens der bestimmten Kapazitätsinformation; und
- Erfassen von Einspeiseinformationen indikativ für eine Menge von Strom, die in ein Stromnetz einspeisbar ist, wobei die Menge von Strom, die in das Stromnetz einspeisbar ist, von der Stromerzeugungsanlage (141) erzeugt wurde;

wobei das Bestimmen von der Kapazitätsinformation zumindest teilweise basierend auf den erfassten Einspeiseinformationen erfolgt;
das Verfahren dadurch gekennzeichnet ist, dass das Verfahren ferner umfasst:

- Bestimmen einer Freigabeinformation indikativ für einen Anteil der Kapazität des Energiespeichers, welcher zum Zwischenspeichern von elektrischer Energie von dem Stromnetz nutzbar ist, wobei die Freigabeinformation zumindest teilweise basierend auf der bestimmten Kapazitätsinformation bestimmt wird;
- Ausgeben oder Veranlassen des Ausgebens der bestimmten Freigabeinformation;
- Freigabe des Anteils der Kapazität des Energiespeichers für ein Zwischenspeichern von Strom aus dem Stromnetz; und
- Erfassen von Wechselrichterinformationen indikativ für Stromverluste, die bei einem Wandeln von dem von der Stromerzeugungsanlage erzeugten Strom in einem von dem Haushalt nutzbaren Strom auftreten;

wobei das Bestimmen der Kapazitätsinformation zumindest teilweise basierend auf den erfassten Wechselrichterinformationen erfolgt und wobei zusätzlich eine Dimensionierung des Wechselrichters erfolgt.

Gemäß einem zweiten Aspekt ,welcher nicht im Umfang der vorliegenden Erfindung ist, wird eine Vorrichtung beschrieben, welche dazu eingerichtet ist oder entsprechende Mittel umfasst, ein Verfahren nach dem ersten Aspekt durchzuführen und/oder zu steuern. Vorrichtungen des Verfahrens gemäß dem ersten Aspekt sind oder umfassen insbesondere eine oder mehrere Vorrichtungen gemäß dem zweiten Aspekt.

Gemäß einem dritten Aspekt wird ein System beschrieben, umfassend eine oder mehrere Vorrichtungen, welche zusammen dazu ausgebildet und/oder eingerichtet sind, ein gegenständliches Verfahren nach allen Aspekten auszuführen, das System einen Server, eine in einem Haushalt angeordnete Stromerzeugungsanlage und ein in dem Haushalt angeordnetes Smartmeter und eine Vorrichtung umfasst.

Bei einer Stromerzeugungsanlage handelt es sich im Sinne des Gegenstands um eine Energiequelle, insbesondere um eine sogenannte erneuerbare Energiequelle. Beispielsweise ist die Stromerzeugungsanlage eine Photovoltaikanlage, eine KWK-Anlage, Windkraftanlage, Solaranlage, Geothermieanlage, oder eine Kombination hiervon, um einige nicht limitierende Beispiele zu nennen. Ferner kann die Stromerzeugungsanlage ein Mikro-KW (Kraftwerk), z. B. ein Blockheizkraftwerk oder dergleichen sein, welches in dem Haushalt installierbar ist.

Eine Photovoltaikanlage, auch PV-Anlage (bzw. kurz PVA) genannt, ist eine Solarstromanlage, in der mittels Solarzellen ein Teil der Sonnenstrahlung in elektrische Energie umgewandelt wird. Die dabei typische direkte Art der Energiewandlung bezeichnet man als Photovoltaik.

Eine KWK-Anlage erzeugt gleichzeitig Strom und Wärme. Dabei wird die Abwärme, die bei der Stromerzeugung entsteht, zur Erwärmung von Heiz- oder Brauchwasser in einem Haushalt genutzt.

Unter einem Haushalt wird beispielsweise ein Wohngebäude mit einer oder mehreren Wohneinheiten, ein Bürogebäude mit einem oder mehreren Büros, oder ein öffentlich zugängliches Gebäude (z. B. ein Bahnhof, Flughafen, Einkaufszentrum, oder dergleichen) verstanden, um einige nicht-limitierende Beispiele zu nennen. Der Haushalt weist zumindest eine Stromerzeugungsanlage auf, beispielsweise kann auf dem Dach eines Gebäudes eine Photovoltaikanlage, und/oder im Keller des Gebäudes eine KWK-Anlage oder eine weitere Stromerzeugungsanlage (z. B. ein (Mikro-) Blockheizkraftwerk) installiert sein, welche dazu ausgebildet sind, zumindest einen Teil der in dem Haushalt zu verbrauchenden elektrischen Energie zu erzeugen. Vor dem Verbrauch ist der erzeugte Strom beispielsweise in einem Energiespeicher speicherbar.

Unter einem Energiespeicher - im Folgenden auch mit Batterie bezeichnet - wird insbesondere jeder Energiespeicher verstanden, der eine Energie mittels elektrochemischer oder physikalischer Prozesse speichert und eine Ausgangsspannung bereitstellt. Insbesondere sind darunter Energiespeicher zu verstehen, die eine oder mehrere in Reihe und gegebenenfalls auch parallel geschaltete Kondensator-, Akkumulator- und/oder Batteriezellen enthalten. Bevorzugte elektrochemische Energiespeicher können Akkumulatorzellen, insbesondere vom Typ Pb - Bleiakku, NiCd - Nickel-Cadmium-Akku, NiH2 - Nickel-Wasserstoff-Akkumulator, NiMH - Nickel-Metallhydrid-Akkumulator, Li-Ion - Lithium-Ionen-Akku, LiPo - Lithium-Polymer-Akku, LiFe - Lithium-Metall-Akku, LiMn - Lithium-Mangan-Akku, LiFePO4 - Lithium-Eisen-Phosphat-Akkumulator, LiTi - Lithium-Titanat-Akku, RAM - Rechargeable Alkaline Manganese, Ni-Fe - Nickel-Eisen-Akku, Na/NiCl - Natrium-Nickelchlorid-Hochtemperaturbatterie-Batterie SCiB - Super Charge Ion Battery, Silber-Zink-Akku, Silikon-Akku, Vanadium-Redox-Akkumulator und/oder Zink-Brom-Akku aufweisen. Es können auch Doppelschichtkondensatoren oder andere Kondensatortypen als Energiespeicher dienen. Der Energiespeicher kann eine oder mehrere Zellen aufweisen.

Im Folgenden wird das Einspeichern von elektrischer Energie in den Energiespeicher auch mit Laden des Energiespeichers, und das Ausspeisen von in dem Energiespeicher gespeicherter elektrischer Energie mit Entladen des Energiespeichers bezeichnet. Die Erzeugungsinformationen und/oder die Verbrauchsinformationen können beispielsweise in Form von Daten oder in Form von einer Vielzahl (mindestens zwei) Datensätzen erfasst werden bzw. umfassen. Die Erzeugungsinformationen können beispielsweise indikativ für die von der Stromerzeugungsanlage erzeugte elektrische Leistung sein. Die Verbrauchsinformationen können beispielsweise indikativ für die von dem Haushalt verbrauchte elektrische Leistung sein. Bei den Verbrauchsinformationen handelt es sich z. B. um die aus dem Stromnetz bezogene elektrische Leistung, die beispielsweise neben der von der Stromerzeugungsanlage erzeugten elektrischen Energie von dem Haushalt verbraucht wird. Die Erzeugungsinformationen und/oder die Verbrauchsinformationen werden beispielsweise von einem oder mehreren Stromzählern erfasst. Die erfassten Erzeugungsinformationen und/oder die erfassten Verbrauchsinformationen werden beispielsweise vor dem Bestimmen der Kapazitätsinformation an eine Vorrichtung, z. B. einen Server übermittelt. Das Übermitteln der Informationen kann beispielsweise über eine Kommunikationsschnittstelle (z. B. gemäß dem WLAN- (Wireless Local Area Network) oder dem BT (Bluetooth)-Standard) erfolgen. Die Übertragung der Informationen kann beispielsweise über das Internet oder ein Datennetz erfolgen, welches die Vorrichtungen miteinander verbindet. Nach dem Bestimmen der Kapazitätsinformation kann die bestimmte Kapazitätsinformation entsprechend an eine Vorrichtung des Nutzers (z. B. ein Computer) übertragen werden.

In einer beispielhaften Ausgestaltung erfolgt das Bestimmen der Kapazitätsinformation zumindest teilweise basierend auf einem Referenzwert, der als Vergleichswert beispielsweise als ein Faktor dem Bestimmen zugrunde gelegt wird. Der Referenzwert repräsentiert beispielweise, dass 100% der von der Stromerzeugungsanlage erzeugten Energie unmittelbar in dem Haushalt verbraucht werden muss. Nicht verbrauchter Strom kann mangels eines Energiespeichers nicht gespeichert werden. Zum Bestimmen der Kapazitätsinformation wird entsprechend der Energiespeicher aus Berechnungsgründen z. B. mit einer Kapazität von 0 kWh ausgelegt.

Ein weiterer Faktor, auf welchem zumindest teilweise basierend das Bestimmen der Kapazitätsinformation erfolgen kann, ist beispielsweise eine Lebensdauer des Energiespeichers. Beispielsweise sollten Tiefentladungen des Energiespeichers vermieden werden. Um Tiefentladungen des Energiespeichers vermeiden zu können, kann beispielsweise eine sogenannte "nutzbare Kapazität" des Energiespeicher verwendet werden. Die tatsächliche Kapazität des Energiespeichers kann also etwas größer sein, und entsprechend weniger Kapazität des Energiespeichers wird genutzt, um z. B. Tiefenentladungen und ähnlichen Randeffekten vorzubeugen. Entsprechend kann das Bestimmen der Kapazitätsinformation beispielsweise derart erfolgen, dass die Dimensionierung des Energiespeichers derart bestimmt wird, dass eine Tiefentladung des Energiespeichers vermieden wird. Dies kann beispielsweise zumindest teilweise basierend auf den erfassten Verbrauchsinformationen erfolgen. Die Verbrauchsinformationen können beispielsweise Aufschluss über einen Stromverbrauch des Haushalts geben, wobei der Stromverbrauch des Haushalts derjenige ist, welcher zusätzlich zu dem von der Stromerzeugungsanlage erzeugten Strom aus dem Stromnetz bezogen wird. Weitere Faktoren, auf welchen beispielsweise zumindest teilweise basierend das Bestimmen der Kapazitätsinformation erfolgen kann, sind z. B. wirtschaftliche Faktoren. Ein wirtschaftlicher Faktor ist beispielsweise die Amortisierungsdauer der Stromerzeugungsanlage und/oder des Energiespeichers. Ergibt die bestimmte Kapazitätsinformation beispielsweise, dass bei Anschaffung eines Energiespeichers die Amortisierungsdauer sehr lang ist, kann es beispielsweise basierend auf dem tatsächlichen Stromverbrauch des Haushalts am sinnvollsten sein, auf eine Investition in einen Energiespeicher zumindest bei aktueller Marktlage und dem Preis für den Energiespeicher auf diesen zu verzichten.

Ferner kann beispielsweise eine etwaige Strompreiserhöhung für aus dem Stromnetz zusätzlich zu beziehenden Strom bei dem Bestimmen der Kapazitätsinformation berücksichtigt werden. Da eine etwaige Strompreiserhöhung für einen zukünftigen Zeitraum lediglich geschätzt werden kann, kann die Strompreiserhöhung beispielsweise mit etwa 2% Preissteigerung pro Jahr angenommen werden. Zusätzlich oder alternativ kann die Strompreiserhöhung auf Basis von historischen Daten geschätzt werden, indem beispielsweise die tatsächliche Strompreiserhöhung von einem oder von mehreren der vergangenen Jahre berücksichtigt wird und eine ähnliche oder gleiche Preissteigerung für die Zukunft angenommen wird. Eine Strompreiserhöhung hat beispielsweise Einfluss auf eine Amortisierungsdauer einer Stromerzeugungsanlage und/oder eines Energiespeichers, so dass auch die Kapazitätsinformation hierdurch entsprechend beeinflusst werden kann.

In einer beispielhaften Ausgestaltung werden die Verbrauchsinformationen und/oder die Erzeugungsinformationen über ein vordefiniertes Zeitintervall erfasst.

Das vordefinierte Zeitintervall kann beispielsweise im Vorfeld bestimmt sein. Zusätzlich oder alternativ kann das vordefinierte Zeitintervall nach vorbestimmten Regeln definiert sein.

Die Erzeugungsinformationen und/oder die Verbrauchsinformationen können beispielsweise eine Vielzahl von jeweils einzeln erfassten Datensätzen sein und/oder umfassen, z. B. in zeitlichen Intervallen erfasst. Jeweils ein Datensatz der Erzeugungsinformationen und/oder der Verbrauchsinformationen kann beispielsweise zu einem bestimmten Zeitpunkt erfasst sein. Ein weiterer Datensatz der Erzeugungsinformationen und/oder der Verbrauchsinformationen kann beispielsweise zu einem weiteren Zeitpunkt erfasst sein. Die jeweiligen Datensätze der Erzeugungsinformationen und/oder der Verbrauchsinformationen können beispielsweise in gleichmäßigen Abständen bzw. Intervallen erfasst sein. Entsprechend können die einzelnen Datensätze der Erzeugungsinformationen und/oder der Verbrauchsinformationen diskret erfasst sein. Entsprechend können die jeweiligen Datensätze der Erzeugungsinformationen und/oder der Verbrauchsinformationen in Intervallen von einer Sekunde, einer Minute bis mehreren Minuten (z. B. 10, 15, 20, oder 30 Minuten) erfasst sein, so dass ein historischer Verlauf von der entsprechenden Vielzahl von Datensätzen der Erzeugungsinformationen und/oder der Verbrauchsinformationen umfasst ist.

Ferner können die Erzeugungsinformationen und/oder die Verbrauchsinformationen beispielsweise insgesamt einen (historischen bzw. vergangenen) Zeitraum von z.B. einem Monat, zwei Monaten, drei Monaten, einem halben Jahr, einem Jahr oder länger umfassen, um einige nicht-limitierende Beispiele zu nennen.

Das Verfahren analysiert beispielsweise aktuelle Leistungsdaten (Erzeugungsinformationen) einer in dem Haushalt installierten Stromerzeugungsanlage (z. B. Photovoltaiksystems, z. B. umfassend zumindest eine Photovoltaikzelle), und (z. B. aktuelle und/oder historische) Verbrauchsinformationen, um das Bestimmen von der Kapazitätsinformation indikativ für eine Kapazität für den Energiespeicher durchführen zu können.

Das Bestimmen der Kapazitätsinformation erfolgt entsprechend zumindest teilweise basierend auf aktuellen und/oder historischen Erzeugungsinformationen und/oder auf aktuellen und/oder historischen Verbrauchsinformationen, die beispielsweise über einen vordefinierten Zeitraum, z. B. die vergangene Monate bis ein Jahr oder mehr, erfasst wurden. Die Erzeugungsinformationen und/oder die Verbrauchsinformationen können jeweils eine Vielzahl von Datensätze umfassen, die beispielsweise in täglichem, stündlichem, minütlichem oder sogar sekündlichem Abstand voneinander erfasst sind. Eine minutengenaue Auflösung der von den Erzeugungsinformationen und/oder Verbrauchsinformationen umfassten Datensätze ist bevorzugt, da dies z. B. einen guten Kompromiss zwischen Speicherbedarf und Informationsgehalt durch die genaue Datenauflösung darstellt. Diese aktuellen und/oder historischen Informationen werden beispielsweise in einem Speicher hinterlegt, z. B einer Datenbank. Diese gespeicherten Datensätze können beispielsweise aus der Datenbank ausgelesen werden.

Das Bestimmen der Kapazitätsinformation ist basierend auf zumindest einem Datensatz, der jeweils von den Erzeugungsinformationen und/oder den Verbrauchsinformationen umfasst ist, möglich. Ist beispielsweise noch keine Stromerzeugungsanlage in dem Haushalt vorhanden, können alternativ die Erzeugungsinformationen der Stromerzeugungsanlage simuliert werden. Nähere Details hierzu sind im hinteren Teil dieser Spezifikation zu finden.

Entsprechend kann das Bestimmen der Kapazitätsinformation beispielsweise auf Basis von historischen Erzeugungsinformationen und Verbrauchsinformationen erfolgen. In einer beispielhaften Ausgestaltung erfolgt das Bestimmen der Kapazitätsinformation zumindest teilweise basierend auf jedem von den Erzeugungsinformationen und den Verbrauchsinformationen umfassten Datensatz.

Derart kann das Bestimmen der Kapazitätsinformationen indikativ für eine Dimensionierung eines Energiespeichers für eine von einem Haushalt umfasste Stromerzeugungsanlage auf Basis von tatsächlichen Erzeugungsinformationen (der von der Stromerzeugungsanlage erzeugte elektrischer Strom) und Verbrauchsinformationen (der von dem Haushalt verbrauchte elektrische Strom) erfolgen. Die Kapazität des Energiespeichers kann entsprechend höchst spezifisch auf die tatsächlich im Haushalt auftretenden Anforderungen angepasst sein.

Das Bestimmen der Kapazitätsinformationen erfolgt zumindest teilweise basierend auf den Verbrauchsinformationen, also auf der Basis des tatsächlich verbrauchten Stroms durch zumindest einen Energieverbraucher des Haushalts. Das Bestimmen der Kapazitätsinformation erfolgt beispielsweise, indem der von der Stromerzeugungsanlage erzeugten Strom minus dem verbrauchten Strom des Haushalts bestimmt wird. Entsprechend kann beispielsweise erfasst werden, wie oft und zu welchem Zeitpunkt die erzeugte Menge Strom von der Stromerzeugungsanlage ausreicht, um den Verbrauch von Strom des Haushalts abzudecken bzw. übersteigt, so dass dieser überschüssiger Strom in einem Energiespeicher, z. B. zur späteren Verwendung gespeichert werden kann.

Das Bestimmen der Kapazitätsinformation umfasst gegenständlich ein Berücksichtigen einer Gleichzeitigkeit von den Erzeugungsinformationen und den Verbrauchsinformationen. Über die Gleichzeitigkeit von Erzeugungsinformationen indikativ für eine erzeugte Energiemenge und von Verbrauchsinformationen indikativ für eine von dem Haushalt verbrauchte Energiemenge kann also beispielsweise erfasst werden, wieviel der momentan erzeugten Energiemenge von dem Haushalt genutzt werden kann. Die Nutzung kann dabei entweder über einen direkten Verbrauch von einem oder mehreren Energieverbrauchern des Haushalts erfolgen, durch ein Einspeichern der erzeugten Energiemenge in den Energiespeicher, durch ein Einspeisen der erzeugten Energiemenge in das Stromnetz eines Energieversorgungsunternehmens (gegen eine entsprechende Vergütung), oder eine Kombination hiervor. Das Berücksichtigen der Gleichzeitigkeit von erzeugter Energiemenge zu diesem Zeitpunkt bzw. zu dieser Zeitperiode verbrauchter Energiemenge des Haushalts ermöglicht eine äußerst genaue Nutzungsprognose für einen Energiespeicher. Dies kann ferner einen positiven Einfluss auf die Rentabilität eines Energiespeichers für den Haushalt haben. Entsprechend kann das Bestimmen der Kapazitätsinformation zumindest teilweise basierend auf den erfassten Erzeugungsinformationen und den erfassten Verbrauchsinformationen unter Berücksichtigung dieser Gleichzeitigkeit erfolgen.

Die Erzeugungsinformationen können beispielsweise von einer Energiemanagementbox erfasst werden. Die Energiemanagementbox erfasst beispielsweise die Erzeugungsleistung der Stromerzeugungsanlage, z. B. einer Photovoltaikanlage oder einer KWK-Anlage. Die Verbrauchsinformationen können beispielsweise mittels eines Stromzählers, z. B. ein Smartmeter erfasst werden. Der Smartmeter kann beispielsweise ferner eine Menge von eingespeistem Strom in das Stromnetz eines Energieversorgungsunternehmens erfassen. Dabei kann es sich zu minimieren. Es kann ferner beispielsweise sichergestellt werden, dass das Potenzial der in dem Haushalt installierten Stromerzeugungsanlage hinreichend ausgeschöpft wird.

Das Verfahren umfasst ferner:

- Erfassen von Einspeiseinformationen indikativ für eine Menge von Strom, die in ein Stromnetz einspeisbar ist, wobei die Menge von Strom, die in das Stromnetz einspeisbar ist, von der Stromerzeugungsanlage erzeugt wurde;

wobei das Bestimmen von der Kapazitätsinformation zumindest teilweise basierend auf den erfassten Einspeiseinformationen erfolgt.

Zusätzlich kann ein Erfassen von Bezugsinformationen indikativ für eine aus dem Stromnetz bezogene Energiemenge erfolgen. Das Erfassen der Erzeugungsinformationen, der Verbrauchsinformationen, der Einspeiseinformationen, der Bezugsinformationen, oder einer Kombination hiervon kann beispielsweise gleichzeitig, also parallel erfolgen. Alternativ kann das Erfassen der Erzeugungsinformationen, der Verbrauchsinformationen, der Einspeiseinformationen, der Bezugsinformationen, oder einer Kombination hiervon nacheinander erfolgen.

Die Einspeiseinformationen können beispielsweise von einem oder mehreren Stromzählern erfasst. Die einen oder mehreren Stromzähler können beispielsweise als ein Smartmeter ausgebildet sein. Der Smartmeter kann beispielsweise als ein Zweirichtungsstromzähler agieren bzw. ausgebildet sein, wobei der Smartmeter zum einen die aus dem Stromnetz bezogene elektrische Energie (Strom) erfasst (z. B. misst)- Einspeiseinformationen - und zum anderen beispielsweise die in das Stromnetz eingespeiste elektrische Energie (Strom) erfasst (z. B. misst) - Bezugsinformationen.

In einer alternativen oder zusätzlichen beispielhaften Ausgestaltung nach allen Aspekten kann das Erfassen der Verbrauchsinformationen beispielsweise erfolgen, zu minimieren. Es kann ferner beispielsweise sichergestellt werden, dass das Potenzial der in dem Haushalt installierten Stromerzeugungsanlage hinreichend ausgeschöpft wird.

Das Verfahren umfasst ferner:

- Erfassen von Einspeiseinformationen indikativ für eine Menge von Strom, die in ein Stromnetz einspeisbar ist, wobei die Menge von Strom, die in das Stromnetz einspeisbar ist, von der Stromerzeugungsanlage erzeugt wurde;

wobei das Bestimmen von der Kapazitätsinformation zumindest teilweise basierend auf den erfassten Einspeiseinformationen erfolgt.

Zusätzlich kann ein Erfassen von Bezugsinformationen indikativ für eine aus dem Stromnetz bezogene Energiemenge erfolgen. Das Erfassen der Erzeugungsinformationen, der Verbrauchsinformationen, der Einspeiseinformationen, der Bezugsinformationen, oder einer Kombination hiervon kann beispielsweise gleichzeitig, also parallel erfolgen. Alternativ kann das Erfassen der Erzeugungsinformationen, der Verbrauchsinformationen, der Einspeiseinformationen, der Bezugsinformationen, oder einer Kombination hiervon nacheinander erfolgen.

Die Einspeiseinformationen können beispielsweise von einem oder mehreren Stromzählern erfasst. Die einen oder mehreren Stromzähler können beispielsweise als ein Smartmeter ausgebildet sein. Der Smartmeter kann beispielsweise als ein Zweirichtungsstromzähler agieren bzw. ausgebildet sein, wobei der Smartmeter zum einen die aus dem Stromnetz bezogene elektrische Energie (Strom) erfasst (z. B. misst)- Einspeiseinformationen - und zum anderen beispielsweise die in das Stromnetz eingespeiste elektrische Energie (Strom) erfasst (z. B. misst) - Bezugsinformationen.

In einer alternativen oder zusätzlichen beispielhaften Ausgestaltung nach allen Aspekten kann das Erfassen der Verbrauchsinformationen beispielsweise erfolgen, indem beispielsweise basierend auf den erfassten Erzeugungsinformationen, den erfassten Einspeiseinformationen, den erfassten Bezugsinformationen, oder einer Kombination hiervon diese bestimmt werden.

In einer weiteren beispielhaften Ausgestaltung umfasst das Bestimmen der Kapazitätsinformation das Bestimmen einer Ladezustandsinformation des Energiespeichers, wobei die Ladezustandsinformation indikativ für eine Menge von gespeichertem Strom in dem Energiespeicher ist.

Die Ladezustandsinformation wird beispielsweise initial mit einem Wert von 0% angenommen, wobei ein Wert von 0% bedeutet, dass von der verfügbaren Kapazität des Energiespeichers 0% genutzt werden bzw. in 0% der verfügbaren Kapazität Strom gespeichert ist. Der Energiespeicher ist entsprechend also vollständig entladen. Repräsentiert die Ladezustandsinformation hingegen einen Wert von 100%, ist entsprechend der Energiespeicher vollständig geladen bzw. 100% der verfügbaren Energie des Energiespeichers können zur Versorgung von Verbrauchern im Haushalt eingesetzt werden. Die Ladezustandsinformation kann beispielsweise einen Wert in der Spanne von 0% bis 100% repräsentieren.

Das Bestimmen der Kapazitätsinformation kann beispielsweise ausgehend von der initialen Ladezustandsinformation iteriert werden. Die jeweiligen Datensätze der Erzeugungsinformationen und/oder der Verbrauchsinformationen in Intervallen von einer Sekunde, einer Minute bis mehreren Minuten (z. B. 10, 15, 20, oder 30 Minuten) können beispielsweise iteriert werden, wobei sich entsprechend die Ladezustandsinformation zumindest teilweise basierend auf den erfassen Erzeugungsinformationen und den erfassten Verbrauchsinformationen nach jeder Iteration verändert. Dies kann beispielsweise für verschiedene maximale Kapazitäten (z. B. 1-20 kWh) eines Energiespeichers simuliert werden. Beispielsweise auf Basis eines anschließenden Vergleichs zwischen den Ergebnissen für die simulierten Energiespeicher (z. B. mit einer jeweiligen Kapazität von 1 bis 20 kWh) kann das Bestimmen der Kapazitätsinformation derart erfolgen, so dass derjenige Energiespeicher ausgewählt wird, der am sinnvollsten für den tatsächlichen Bedarf des Haushalts angepasst ist.

In einer beispielhaften Ausgestaltung ist die Kapazitätsinformation ferner indikativ für eine Nutzungsinformation des Energiespeichers, wobei ein Nutzer zumindest teilweise basierend auf der Nutzungsinformation erfassen kann, ob die Kapazität des Energiespeichers optimal genutzt wird oder nicht.

Alternativ kann die Kapazitätsinformation eine entsprechende Nutzungsinformation umfassen, wobei die Nutzungsinformation entsprechend bestimmt wird.

Beispielsweise kann als optimale Nutzung der Kapazität des Energiespeichers angesehen werden, wenn eine Strombezugseinsparung von Strom aus dem Stromnetz erreichbar ist.

Alternativ oder zusätzlich kann als optimale Nutzung der Kapazität des Energiespeichers angesehen werden, wenn möglichst viel des von der Stromerzeugungsanlage erzeugten Stroms von zumindest einem Energieverbraucher des Haushalts verbraucht wird.

Eine beispielhafte Ausgestaltung sieht vor, dass das Bestimmen der Kapazitätsinformation unter Berücksichtigung des Maximierens der Autarkie des Haushalts erfolgt.

Unter der Autarkie des Haushalts wird eine Unabhängigkeit von einem Strombezug aus dem Stromnetz verstanden. Wie bereits vorstehend ausgeführt, kann beispielsweise das Bestimmen der Kapazitätsinformation ein Berücksichtigen einer Strombezugseinsparung umfassen, wobei das Einsparen zumindest teilweise die Autarkie des Haushalts beeinflussen kann.

In einer weiteren beispielhaften Ausgestaltung erfolgt das Bestimmen der Kapazitätsinformation unter Berücksichtigung des Minimierens eines Strombezugs aus dem Stromnetz.

Zum Minimieren des Strombezugs aus dem Stromnetz bzw. zur maximal möglichen Strombezugseinsparung müsste die Kapazität des Energiespeichers sehr groß ausgelegt werden, wobei eine Sättigung hinsichtlich des Kosten/Nutzen-Verhältnisses des Energiespeichers relativ weit unterhalb einer derart großen Kapazität des Energiespeichers nahezu eintritt. Beispielsweise können 80 bis 90% der maximal möglichen Strombezugseinsparung mit einer Kapazität des Energiespeichers erreicht werden, die nur etwa 20% von derjenigen Kapazitätsgröße des Energiespeichers beträgt, die zur maximal möglichen Strombezugseinsparung erforderlich wäre.

Eine beispielhafte Ausgestaltung sieht vor, dass die Kapazitätsinformation eine Größe eines Energiespeichers repräsentiert.

Alternativ kann die Kapazitätsinformation eine Größeninformation des Energiespeichers umfassen bzw. repräsentieren, z. B. eine Kapazität in der Einheit kWh.

In einer weiteren beispielhaften Ausgestaltung erfolgt das Bestimmen der Kapazitätsinformation zumindest teilweise basierend auf einem der folgenden Fälle i) bis iii):

i) die Ladezustandsinformation repräsentiert einen Wert größer als 0% und eine bestimmte Differenz zwischen den Erzeugungsinformationen und den Verbrauchsinformationen ergibt, dass ein Bezug von Strom aus einem Stromnetz erfolgt;

ii) die Ladezustandsinformation repräsentiert einen Wert kleiner als 100% und eine bestimmte Differenz zwischen den Erzeugungsinformationen und den Verbrauchsinformationen ergibt, dass eine Einspeisung von Strom in das Stromnetz erfolgt;

iii) die Ladezustandsinformation repräsentiert einen Wert gleich 0% und eine bestimmte Differenz zwischen den Erzeugungsinformationen und den Verbrauchsinformationen ergibt, dass ein Bezug von Strom aus dem Stromnetz erfolgt, oder die Ladezustandsinformation repräsentiert einen Wert gleich 100% und eine bestimmte Differenz zwischen den Erzeugungsinformationen und den Verbrauchsinformationen ergibt, dass ein Bezug von Strom aus dem Stromnetz erfolgt;

und das Bestimmen der Kapazitätsinformation ferner umfasst:

- Bestimmen einer aktualisierten Ladezustandsinformation basierend auf dem entsprechend vorliegenden Fall i) bis iii).

Das Bestimmen der Kapazitätsinformation zumindest teilweise basierend auf einem der Fälle i) bis iii) kann beispielsweise erfolgen, wenn die Erzeugungsinformationen und/oder die Verbrauchsinformationen eine Vielzahl von Datensätzen (z. B. vorliegend in minütlicher Auflösung) umfassen, und eine Iteration über diese Daten für verschiedene Kapazitäten (z. B. 1 bis 20 kWh) simuliert wird. Für jeden der Vielzahl von Datensätzen kann beispielsweise bestimmt werden, ob ein Bezug von Strom aus dem Stromnetz, oder eine Einspeisung von Strom in das Stromnetz stattfindet.

Im Fall i) wird der Energiespeicher entladen und um den Strombedarf des Haushalts zu diesem Zeitpunkt zu decken, muss zusätzlicher Strom neben dem von der Stromerzeugungsanlage erzeugten Strom aus dem Stromnetz bezogen werden. Die Bezugsinformationen bzw. ein Datensatz, der von den Bezugsinformationen umfasst ist, kann entsprechend dem Datensatz bzw. den Datensätzen der Erzeugungsinformationen und/oder Verbrauchsinformationen zu dem selben Zeitpunkt bestimmt werden. Der entsprechende Datensatz der Bezugsinformationen ist dann beispielsweise indikativ dafür, dass im Fall i) neben dem von der Stromerzeugungsanlage erzeugten Strom zusätzlicher Strom aus dem Stromnetz bezogen wird.

Im Fall ii) wird der Energiespeicher geladen und nach Deckung des Strombedarfs von dem Haushalt zu diesem Zeitpunkt kann zusätzlicher Strom, der von der Stromerzeugungsanlage zur Verfügung steht, zum Laden des Energiespeichers verwendet werden. Die Einspeiseinformationen bzw. ein Datensatz, der von den Einspeiseinformationen umfasst ist, kann entsprechend dem Datensatz bzw. den Datensätzen der Erzeugungsinformationen und/oder Verbrauchsinformationen zu dem selben Zeitpunkt erfasst werden. Der entsprechende Datensatz der Einspeiseinformationen ist dann beispielsweise indikativ dafür, dass im Fall ii) von der Stromerzeugungsanlage erzeugter Strom in das Stromnetz eingespeist wird.

Im Fall iii) wird der Energiespeicher zu diesem Zeitpunkt nicht genutzt.

Zusätzlich können beispielsweise Verlustmechanismen miteinbezogen werden, z. B. eine Selbstentladung des Energiespeichers bei Nicht-Nutzung und/oder Umrichtverluste.

Das Verfahren umfasst ferner den folgenden Verfahrensschritt:

- Erfassen von Wechselrichterinformationen indikativ für Stromverluste, die bei einem Wandeln von dem von der Stromerzeugungsanlage erzeugten Strom in einem von dem Haushalt nutzbaren Strom auftreten;

wobei das Bestimmen der Kapazitätsinformation zumindest teilweise basierend auf den erfassten Wechselrichterinformationen erfolgt.

Zusätzlich kann ein Bestimmen von einer Wechselrichterinformation erfolgen. Beispielsweise kann bestimmt werden, welcher Wechselrichter z. B. die geringsten Verluste in Bezug auf die Spitzenleistung der Stromerzeugungsanlage und dem Energiespeicher liefert. Zusätzlich erfolgt eine Dimensionierung des Wechselrichters, so dass ein Wechselrichter nicht derart dimensioniert ist, dass er viel größer Leistungen richten kann, als jemals basierend auf der mit dem Wechselrichter elektrisch verbundenen Stromerzeugungsanlage anfallen können. Dies kann beispielsweise die Amortisierungsdauer des Energiespeichers, sowie zusätzlich notwendige technische Bauteile wie den Wechselrichter, positiv beeinflussen. Im Stand der Technik wird ein Wechselrichter in der Regel anhand der maximal möglichen Leistung (Spitzenleistung) der Stromerzeugungsanlage dimensioniert. Diese Spitzenleistung wird in der Regel nicht abgerufen, da beispielsweise der maximale Ladestrom des mit der Strom erzeugenden Anlage verbundenen Energiespeichers einen limitierenden Faktor darstellen kann.

Eine der wichtigsten Eigenschaften eines Wechselrichters ist sein Umwandlungswirkungsgrad. Der Umwandlungswirkungsgrad gibt an, welcher Anteil der in Form von Gleichstrom zu richtenden Energie als Wechselstrom nach Umwandlung vorliegt. Beispielsweise kann ein Wechselrichter einen Wirkungsgrad von etwa 98 % erreichen. Dies kann entsprechend bei dem Bestimmen der Wechselrichterinformationen berücksichtigt werden.

Das Verfahren umfasst ferner die folgenden Verfahrensschritte:

- Bestimmen einer Freigabeinformation indikativ für einen Anteil der Kapazität des Energiespeichers, welcher zum Zwischenspeichern von elektrischer Energie von dem Stromnetz nutzbar ist, wobei die Freigabeinformation zumindest teilweise basierend auf der bestimmten Kapazitätsinformation bestimmt wird; und
- Ausgeben oder Veranlassen des Ausgebens der bestimmten Freigabeinformation.

Beispielsweise kann der Energiespeicher derart dimensioniert sein, dass 99% der auftretenden Fälle im Haushalt (z. B. bestimmt auf Basis der historischen Verbrauchsinformationen) gewährleistet werden können. Die restliche Kapazität des Energiespeichers wird für ein Zwischenspeichern von Strom aus dem Stromnetz freigeben. Die restliche Kapazität des Energiespeichers kann beispielsweise zur Zwischenspeicherung von bereits erzeugter Energie, z. B. von erneuerbaren Energien, z. B. generiert in anderen Haushalten, verwendet werden. Eine beispielhafte Ausgestaltung sieht vor, dass die stromerzeugende Anlage eine Photovoltaikanlage oder eine Kraft-Wärme-Kopplungsanlage ist.

In einer weiteren beispielhaften Ausgestaltung werden die Erzeugungsinformationen und die Verbrauchsinformationen von einem Stromzähler erfasst. Der Stromzähler ist beispielsweise ein Smartmeter.

**Kurze Beschreibung der Figuren**

In der Zeichnung zeigt

Fig. 1    eine schematische Darstellung eines Ausführungsbeispiels eines Systems;
Fig. 2    eine Visualisierung einer Abhängigkeit eines Strombezugs und einer Autarkie zur Dimensionierung eines Energiespeichers;
Fig. 3    ein Blockdiagramm eines Ausführungsbeispiels einer optionalen Vorrichtung; und
Fig. 4    unterschiedliche Ausführungsbeispiele eines Speichermediums.

**Detaillierte Beschreibung einiger beispielhafter Ausführungsformen**

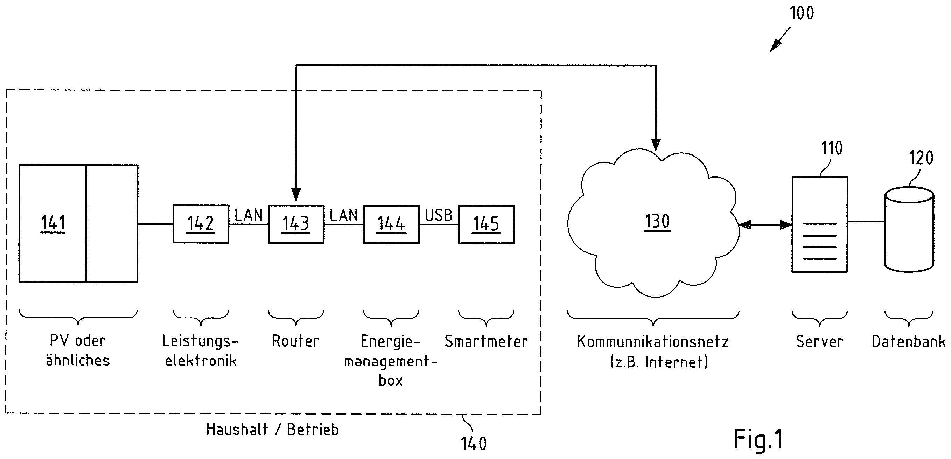

Fig. 1 zeigt ein Ausführungsbeispiel eines Systems 100 gemäß dem dritten Aspekt. Das System 100 ist dazu eingerichtet bzw. umfasst entsprechende Mittel, ein Verfahren gemäß dem ersten Aspekt durchzuführen und/oder zu steuern.

Das System 100 umfasst eine Stromerzeugungsanlage 141, und ein Smartmeter 145, die in einem Haushalt 140 angeordnet sind. Der Haushalt 140 kann optional Leistungselektronik 142, einen Router 143 und eine Energiemanagementbox 144 umfassen. Zwischen den einzelnen Entitäten 141 bis 145 können zur (bi-) direktionalen Datenübertragung Kommunikationsverbindungen vorgesehen sein, z. B. gemäß dem WLAN- und/oder BT-Standard für drahtlose Kommunikationsverbindungen, und/oder gemäß dem LAN- (Local Area Network) und/oder USB- (Universal Serial Bus) für drahtgebundene Kommunikationsverbindungen, um einige nicht-limitierende Beispiele zu nennen. Die Energiemanagementbox 144 ist z. B. mittels einer d0-Schnittstelle mit dem Smartmeter 145 verbunden.

Der Haushalt 140, z. B. die Energiemanagementbox 144 oder der Smartmeter 145 weisen ferner jeweils eine Kommunikationsverbindung mit einem Kommunikationsnetzt 130 (z. B. Internet) auf, so dass Informationen zwischen dem Haushalt 140 und einem Server 110 übertragbar sind. Der Server 110 ist mit einer Datenbank 120 verbunden, so dass z. B. auf in der Datenbank 120 gespeicherte Informationen zugriffen werden kann.

Die Stromerzeugungsanlage 141 kann beispielsweise eine Verbindung zu einem Wechselrichter (in Fig. 1. nicht dargestellt) aufweisen. Die aktuelle erzeugte elektrische Leistung (Strom) der Stromerzeugungsanlage 141 kann entsprechend als ein von Erzeugungsinformationen umfasster Datensatz erfasst werden. Das Messen des erzeugten Stroms kann beispielsweise von dem Smartmeter 145, oder zusätzlich oder alternativ von der Energiemanagementbox 144 durchgeführt werden. Das Erfassen der entsprechenden Erzeugungsinformation kann z.B. über einen Fernzugriff auf der Smartmeter 145 und/oder die Energiemanagementbox 144, und/oder über eine sogenannte Push-Benachrichtigung an der Smartmeter 145 und/oder die Energiemanagementbox 144 erfolgen. Der Smartmeter 145 kann beispielsweise als ein Zweirichtungsstromzähler agieren, wobei der Smartmeter 145 zum einen die aus dem Stromnetz bezogene elektrische Leistung (Strom) erfasst (z. B. misst), und zum anderen die in das Stromnetz eingespeiste elektrische Leistung (Strom) erfasst (z. B. misst). Die Energiemanagementbox 144 kann ferner die von der Stromerzeugungsanlage 141 erzeugte elektrische Leistung (Strom) erfassen (z. B. messen), und optional von dem Smartmeter 145 übermittelten Informationen (die aus dem Stromnetz bezogene elektrische Leistung und die in das Stromnetz eingespeiste elektrische Leistung) speichern, und beispielsweise über eine Kommunikationsschnittstelle an eine weitere Einrichtung (z. B. Server 110) übermitteln.

Insbesondere ermöglicht z. B. Server 110 das Bestimmen von einer Kapazitätsinformation, die beispielsweise eine Dimensionierung eines Energiespeichers, der zum Speichern von von der Stromerzeugungsanlage 141 erzeugter elektrischer Leistung in dem Haushalt 140 von dem System 100 umfasst sein kann, erlauben. Basierend auf dieser Kapazitätsinformation kann beispielweise eine Empfehlung für die Dimensionierung des Energiespeichers angepasst an den tatsächlichen Bedarf in dem Haushalt 140 abgegeben werden. Hierzu wird die bestimmte Kapazitätsinformation von dem Server (z. B. Server 110) ausgegeben werden.

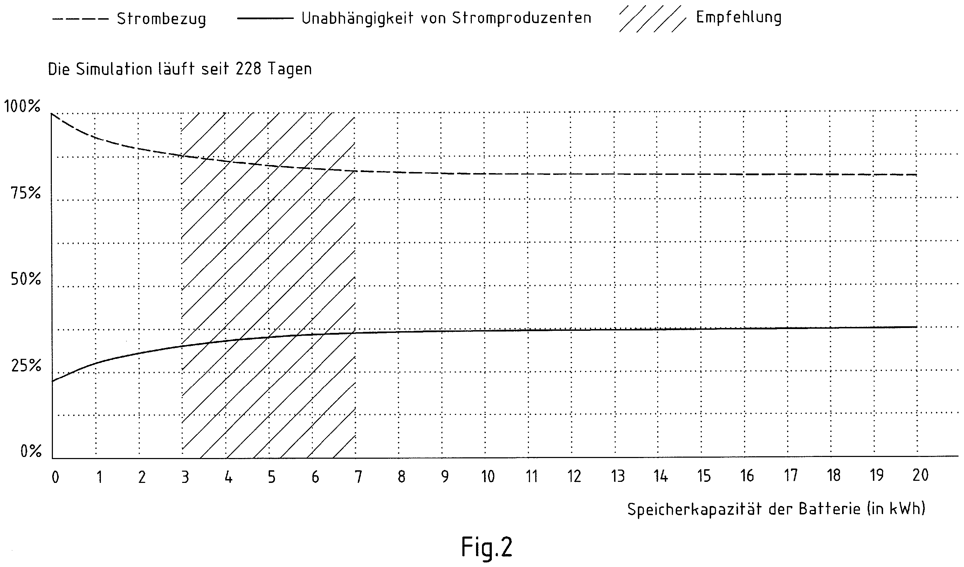

Fig. 2 zeigt eine Visualisierung einer Abhängigkeit eines Strombezugs und einer Autarkie zur Dimensionierung eines Energiespeichers, wobei die Dimensionierung des Energiespeichers nach einem Ausführungsbeispiel bestimmt wurde.

Die x-Achse des in Fig. 2 dargestellten Diagramms zeigt simulierte Energiespeicherkapazitäten, vorliegend von 0 bis 20 kWh. Die y-Achse des Diagramms spiegelt die Höhe des Anteils von Strombezug wider, der aus dem Stromnetz eines Energieversorgungsunternehmens von einem Haushalt neben dem von der Stromerzeugungsanlage (z. B. Stromerzeugungsanlage 141 gemäß Fig. 1) zu beziehen ist. Bei einer Kapazität von 0% (kein Energiespeicher vorhanden) muss von einer Stromerzeugungsanlage erzeugter Strom unmittelbar von dem Haushalt verbraucht werden. Ansonsten muss Strom aus dem Stromnetz bezogen werden. Dieser Fall tritt nur relativ selten ein. Entsprechend ist die gestrichelte obere Linie bei 100 % angeordnet. Die Autarkie des Haushalts von einem Energieversorgungsunternehmen beträgt für den Fall, dass kein Energiespeicher von dem Haushalt umfasst ist, etwa 20 %. Dieser Wert kann je nach Situation im Haushalt geringer oder höher ausfallen.

Es ist zu erkennen, dass mit zunehmender Kapazitätsgröße des (simulierten) Energiespeichers eine Sättigung sowohl für den Strombezug (gestrichelte Kurve) als auch für die Autarkie (durchgezogene Kurve) eintritt. Entsprechend erfolgt das Bestimmen der Kapazitätsinformation beispielsweise für Kapazitätsgrößen des Energiespeichers, welche innerhalb der schraffierten Fläche liegen. Vorliegend wird die Kapazitätsinformation also mit 3 bis 7 kWh bestimmt. Für größere Kapazitätsinformationen verringert sich, wie in dem Diagramm von Fig. 2 dargestellt, weder der Strombezug noch erhöht sich signifikant die Autarkie des Haushalts. Entsprechend sollte ein Energiespeicher für den Haushalt, der an den tatsächlichen Bedarf angepasst ist, eine Dimensionierung von 3 bis 7 kWh für den dargestellten Anwendungsfall aufweisen.

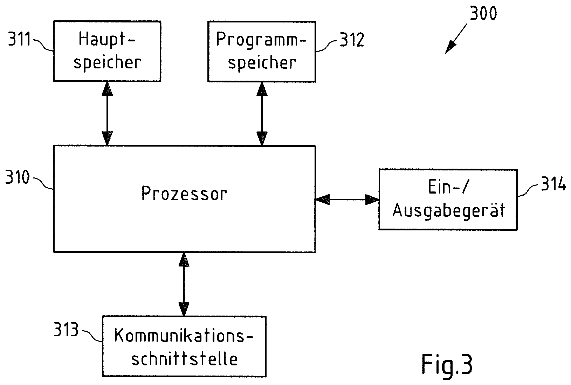

Fig. 3 zeigt ein Blockdiagramm eines Ausführungsbeispiels einer optionalen Vorrichtung 300, welche insbesondere ein beispielhaftes Verfahren gemäß dem ersten Aspekt ausführen kann. Die Vorrichtung 300 ist beispielsweise eine Vorrichtung gemäß dem zweiten oder ein System gemäß dem dritten Aspekt.

Die Vorrichtung 300 kann insofern beispielsweise ein Computer, ein Desktop-Computer, ein Server, ein Thinclient oder ein tragbarer Computer (Mobilgerät), wie etwa ein Laptop-Computer, ein Tablet-Computer, ein persönlicher digitaler Assistent (PDA) oder ein Smartphone sein. Die Vorrichtung kann beispielsweise die Funktion eines Servers oder eines Clients erfüllen.

Prozessor 310 der Vorrichtung 300 ist insbesondere als Mikroprozessor, Mikrokontrolleinheit, Mikrocontroller, digitaler Signalprozessor (DSP), Anwendungsspezifische Integrierte Schaltung (ASIC) oder Field Programmable Gate Array (FPGA) ausgebildet.

Prozessor 310 führt Programmanweisungen aus, die in Programmspeicher 312 gespeichert sind, und speichert beispielsweise Zwischenergebnisse oder ähnliches in Arbeits- oder Hauptspeicher 311. Zum Beispiel ist Programmspeicher 312 ein nicht-flüchtiger Speicher wie ein Flash-Speicher, ein Magnetspeicher, ein EEPROM-Speicher (elektrisch löschbarer programmierbarer Nur-Lese-Speicher) und/oder ein optischer Speicher. Hauptspeicher 311 ist zum Beispiel ein flüchtiger oder nicht-flüchtiger Speicher, insbesondere ein Speicher mit wahlfreiem-Zugriff (RAM) wie ein statischer RAM-Speicher (SRAM), ein dynamischer RAM-Speicher (DRAM), ein ferroelektrischer RAM-Speicher (FeRAM) und/oder ein magnetischer RAM-Speicher (MRAM).

Programmspeicher 312 ist vorzugsweise ein lokaler mit der Vorrichtung 300 fest verbundener Datenträger. Mit der Vorrichtung 300 fest verbundene Datenträger sind beispielsweise Festplatten, die in die Vorrichtung 300 eingebaut sind. Alternativ kann der Datenträger beispielsweise auch ein mit der Vorrichtung 300 trennbar verbindbarer Datenträger sein wie ein Speicher-Stick, ein Wechseldatenträger, eine tragbare Festplatte, eine CD, eine DVD und/oder eine Diskette.

Programmspeicher 312 enthält beispielsweise das Betriebssystem von der Vorrichtung 300, das beim Starten der Vorrichtung 300 zumindest teilweise in Hauptspeicher 311 geladen und vom Prozessor 310 ausgeführt wird. Insbesondere wird beim Starten von Vorrichtung 300 zumindest ein Teil des Kerns des Betriebssystems in den Hauptspeicher 311 geladen und von Prozessor 310 ausgeführt. Das Betriebssystem von Vorrichtung 300 ist beispielsweise ein Windows-, UNIX-, Linux-, Android-, Apple iOS- und/oder MAC-Betriebssystem.

Das Betriebssystem ermöglicht insbesondere die Verwendung der Vorrichtung 300 zur Datenverarbeitung. Es verwaltet beispielsweise Betriebsmittel wie Hauptspeicher 311 und Programmspeicher 312, Kommunikationsschnittstelle 313, Ein- und Ausgabegerät 313, stellt unter anderem durch Programmierschnittstellen anderen Programmen grundlegende Funktionen zur Verfügung und steuert die Ausführung von Programmen.

Prozessor 310 steuert die Kommunikationsschnittstelle 313, welche beispielsweise eine Netzwerkschnittstelle sein kann und als Netzwerkkarte, Netzwerkmodul und/oder Modem ausgebildet sein kann. Die Kommunikationsschnittstelle 313 ist insbesondere dazu eingerichtet, eine Verbindung der Vorrichtung 300 mit anderen Vorrichtungen, insbesondere über ein (drahtloses) Kommunikationssystem, beispielsweise ein Netzwerk, herzustellen und mit diesen zu kommunizieren. Die Kommunikationsschnittstelle 313 kann beispielsweise Daten (über das Kommunikationssystem) empfangen und an Prozessor 310 weiterleiten und/oder Daten von Prozessor 310 empfangen und (über das Kommunikationssystem) senden. Beispiele für ein Kommunikationssystem sind ein lokales Netzwerk (LAN), ein großräumiges Netzwerk (WAN), ein drahtloses Netzwerk (beispielsweise gemäß dem IEEE-802.11-Standard, dem Bluetooth (LE)-Standard und/oder dem NFC-Standard), ein drahtgebundenes Netzwerk, ein Mobilfunknetzwerk, ein Telefonnetzwerk und/oder das Internet.

Des Weiteren kann Prozessor 310 zumindest ein Ein-/Ausgabegerät 314 steuern. Ein-/Ausgabegerät 314 ist beispielsweise eine Tastatur, eine Maus, eine Anzeigeeinheit, ein Mikrofon, eine berührungsempfindliche Anzeigeeinheit, ein Lautsprecher, ein Lesegerät, ein Laufwerk und/oder eine Kamera. Ein-/Ausgabegerät 314 kann beispielsweise Eingaben eines Benutzers aufnehmen und an Prozessor 310 weiterleiten und/oder Informationen für den Benutzer von Prozessor 310 empfangen und ausgeben.

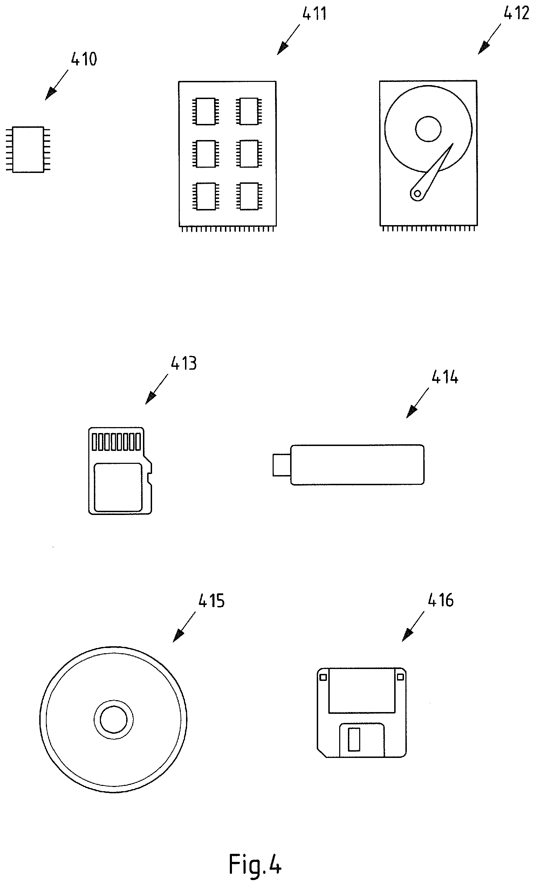

Fig.4 zeigt schließlich unterschiedliche Ausführungsbeispiele von Speichermedien, auf denen ein Ausführungsbeispiel eines erfindungsgemäßen Computerprogrammes gespeichert sein kann. Das Speichermedium kann beispielsweise ein magnetisches, elektrisches, optisches und/oder andersartiges Speichermedium sein. Das Speichermedium kann beispielsweise Teil eines Prozessors (z.B. des Prozessor 410 der Fig. 4) sein, beispielsweise ein (nicht-flüchtiger oder flüchtiger) Programmspeicher des Prozessors oder ein Teil davon (wie Programmspeicher 412 in Fig. 4). Ausführungsbeispiele eines Speichermediums sind ein Flash-Speicher 410, eine SSD-Festplatte 411, eine magnetische Festplatte 412, eine Speicherkarte 413, ein Memory Stick 414 (z.B. ein USB-Stick), eine CD-ROM oder DVD 415 oder eine Diskette 416.

Ferner sollen die folgenden beispielhaften Ausführungsbeispiele ebenfalls als offenbart verstanden werden: Berechnungen zum Bestimmen der Kapazitätsinformation können beispielsweise wie im Folgenden dargelegt erfolgen: Die Menge von erzeugtem Strom ('Prod'; z. B. von der Stromerzeugungsanlage erzeugt) kann beispielsweise anhand der folgenden Formel berechnet werden, wobei 'mCHP' der Menge von erzeugtem Strom einer (Mikro-) KWK-Anlage und 'PVProd' der Menge von erzeugtem Strom einer PV-Anlage entspricht:

$$\text{Prod} = \text{mCHP prod (and/or) PV prod;}$$

Der Anteil des erzeugten Stroms, welcher beispielsweise direkt von dem Haushalt verbraucht wird, ist mit 'Direct usage' bezeichnet. 'SMExport' bezeichnet den in das Stromnetz eingespeisten Strom, z. B. der von der Stromerzeugungsanlage erzeugte Strom, der nicht unmittelbar von dem Haushalt verbraucht wird und/oder für den Fall iii) nach einer beispielhaften gegenständlichen Ausgestaltung, z. B. wenn der Energiespeicher vollständig geladen ist (Ladezustandsinformation repräsentiert einen Wert gleich 100%).

$$\text{Direct Usage (absolute)} = \text{Prod} - \text{SMExport;}$$

$$\text{Direct Usage (relative)} = (\text{Direct Usage (absolute)} / \text{Prod}) * 100.$$

Die Menge von verbrauchtem Strom ('Total Consumption'; z. B. der von dem Haushalt verbrauchte Strom) kann beispielsweise wie folgt berechnet werden, wobei mit 'SMImport' der Anteil des verbrauchten Stroms bezeichnet ist, der aus dem Stromnetz bezogen ist:

$$\text{Prod} = \text{mCHP prod (and/or) PV prod;}$$

$$\text{Direct Usage} = \text{Prod} - \text{SMExport;}$$

$$\text{Total Consumption} = \text{Direct Usage} + \text{SMImport;}$$

$$\text{Autarky} = (\text{Direct Usage} / \text{Total Consumption}) * 100\%.$$

Verluste, die im Rahmen des Energietransports auftreten können, können in den Berechnungen beispielsweise idealisiert berücksichtigt werden. Beispielsweise können typische auftretende Übertragungsverluste, die mit den verwendeten einen oder mehreren Stromleitern verbunden sind, berücksichtigt werden.

Ferner können eine oder mehrere der folgenden wirtschaftlichen Parameter berechnet werden, wobei 'FIT' (Feed in Tariff) eine (mögliche) Einspeisevergütung darstellt. Die möglichen Einsparungen für den Haushalt sind mit 'Savings' bezeichnet:

$$\text{Savings} = (\text{Import\_withoutBat} - \text{Import\_withBat}) * \text{ElectricityPrice} -$$

$$(\text{Export\_withoutBat} - \text{Export\_withBat}) * \text{FIT;}$$

$$Total\ Invest = Typical\_cost\_per\_kWh * shown\ Batterysize;$$

$$ROI = Total\ Invest / „Annual\ Savings",$$

wobei 'ROI' für Return-On-Invest, 'Export' für eine Einspeisung von Strom in das Stromnetz eines Energieversorgungsunternehmens, und 'Import' für einen Bezug von Storm aus dem Stromnetz eines Energieversorgungsunternehmens steht. 'Total Invest' bezeichnet eine mögliche Summe, die zur Anschaffung eines Energiespeichers unter Berücksichtigung der Kapazität des Energiespeichers, welche von der bestimmten Kapazitätsinformation repräsentiert wird, aufzubringen ist. 'Typical_cost_per_kWh' ist beispielsweise eine idealisierte Größe mit marktüblichen Kosten für einen Energiespeicher pro Kapazität in der Einheit kWh, z. B. etwa 1500€ pro kWh.

Ferner kann beispielsweise neben der Menge von gespeichertem Strom z. B. eine (Ent-)Ladeleistung des Energiespeichers berücksichtigt werden, die angibt, wie schnell der Energiespeicher geladen und/oder entladen werden kann bzw. werden können muss, um die von der Stromerzeugungsanlage erzeugte elektrische Energie speichern zu können und/oder gespeicherte elektrische Energie bereitstellen kann, um den Bedarf des Haushalts decken zu können.

Um eine Empfehlung zur Dimensionierung einer Batterie mittels einer bestimmten Kapazitätsinformation abgeben zu können, können entsprechend eine oder mehrere Rahmenbedingungen berücksichtigt werden. Eine von diesen Rahmenbedingungen kann beispielsweise sein, dass 99% aller Haushaltssituationen (vom Spitzen-Leistungsbezug (Peak) abgesehen) abgedeckt werden soll. Beispielsweise kann auf Basis der historischen Daten bestimmt werden, dass z. B. 5mal in der analysierten Periode eine Spitzenleistung von ‚x kW' bezogen wurde, wobei beispielsweise ‚x' größer als 14kW war. Zu einem Zeitpunkt haben folglich beispielsweise mehrere Energieverbraucher im Haushalt kumuliert mehr als 14kW Leistung angefordert und benötigt. Um diesen Fall durch Energie, welche in dem Energiespeicher gespeichert ist, abdecken zu können, müsste entsprechend der Energiespeicher dimensioniert sein, um diesen Fall abdecken zu können. Dies würde jedoch den Energiespeicher mitunter sehr teuer werden lassen bzw. für einen Investor unwirtschaftlich erscheinen. Entsprechend kann die Analyse der historischen Daten als Ergebnis liefern, dass in beispielsweise 99% der in den Daten auftretenden Fälle nur etwa 4 kW von den Energieverbrauchern im Haushalt angefordert wurden. Der Energiespeicher sollte folglich zumindest teilweise basierend auf dieser (Ent-) Ladeleistung dimensioniert sein, wobei diejenige (Ent-) Ladeleistung des Energiespeichers sinnvoll dimensioniert ist, die die 99% der in den Daten auftretenden Fälle abdecken kann, also eine entsprechende (Ent-) Ladeleistung aufweist. Die Kosten für einen Energiespeicher mit einer (Ent-) Ladeleistung, der beispielsweise auch die festgestellte Spitzenleistung, vorliegend 14 kW, mit einer entsprechenden (Ent-) Ladeleistung abdecken kann, würden sehr hoch ausfallen. Da dieser Fall jedoch sehr selten auftritt, kann es wirtschaftlich und technisch sinnvoller sein, die dann benötigte zusätzliche Menge an elektrischer Energie aus dem Stromnetz zu beziehen. Die Investitionskosten können also wirtschaftlich und sinnvoll signifikant reduziert werden.

Alle technischen Parameter können beispielsweise zu einem vorbestimmten Zeitpunkt oder nach Ablauf einer vorbestimmten Zeitspanne (z. B. einmal pro Tag) beispielsweise von einem Server (z.B. Back-End Server) ermittelt werden. Auf Basis dieser Informationen können beispielsweise eine oder mehrere wirtschaftliche Parameter ermittelt werden. Beispielsweise können diese in einem Front-End (beispielsweise einer Applikation, z. B. Browser-Applikation) ermittelt werden. In dem Front-End eingegebene Parameter, z. B. von einem Nutzer mittels einer Eingabeschnittstelle, können derart von dem Front-End bei dem Ermitteln von einer oder mehreren wirtschaftlichen Parametern berücksichtigt werden.

Eine beispielhafte Ausgestaltung sieht vor, dass die Erzeugungsleistung von der Stromerzeugungsanlage (z.B. Photovoltaikanlage, KWK-Anlage oder dergleichen, um einige nicht-limitierende Beispiele zu nennen) prädiziert werden kann. Beispielsweise können auf Basis von Eingabeparameter, die z. B. von einem Nutzer eingeben werden, wie z. B. Photovoltaikanlagengröße, erforderliche Zwischenparameter, wie z. B. Spitzenleistung der Photovoltaik- oder KWK-Anlage ermittelt werden. Anschließend können Parameter, wie beispielsweise historische Wetterinformationen, Erzeugungsleistungen von bereits vorhandenen Stromerzeugungsanlagen in der Umgebung oder dergleichen auf die simulierte Stromerzeugungsanlage übertragen werden. Zumindest teilweise basierend auf diesen Daten und/oder Parameter kann beispielsweise eine Erzeugungsleistung einer simulierten Stromerzeugungsanlage prädiziert werden.

Zum Bestimmen von der Kapazitätsinformation zur Dimensionierung eines Energiespeichers sollte jedoch die tatsächlich verbrauchte Leistung durch zumindest einen Energieverbraucher des Haushalts berücksichtigt werden, die z. B. mittels eines Stromzählers (z. B. ein Smartmeter) erfassbar ist.

Ferner kann zum Bestimmen von der Kapazitätsinformation ein Grundlastverbrauch des Haushalts berücksichtigt werden. Beispielsweise kann hierzu insbesondere der Strombezug, die tatsächlich verbrauchte Leistung, in Ruheperioden, wie beispielsweise in der Nacht oder bei Abwesenheit der in dem Haushalt lebenden Personen ermittelt werden. Insbesondere Änderungen in dem Grundlastverbrauch des Haushalts sind analysierbar. Einem Nutzer können die einen oder mehreren Analyseergebnisse beispielsweise visualisiert dargestellt werden. Dies ermöglicht eine unmittelbare Rückmeldung an den Nutzer hinsichtlich einer Energieverbrauchsoptimierung, wobei dem Nutzer beispielsweise insbesondere Einsparpotenzial (z. B. finanzielles Einsparpotenzial) aufzeigbar ist.

Eine Profilanalyse kann beispielsweise zumindest teilweise basierend auf der ausgegebenen Kapazitätsinformation erfolgen. Zusätzlich kann die Profilanalyse zumindest teilweise basierend auf den Erzeugungsinformationen und/oder den Verbrauchsinformationen erfolgen.

Die Profilanalyse eines Nutzers ist beispielsweise indikativ für eine Empfehlung zur Optimierung des Energieverbrauchs bezogen auf den Haushalt, auf dessen Daten basierend die der Profilanalyse zugrundeliegenden Informationen bestimmt worden sind. Die Profilanalyse ist beispielsweise eine Visualisierung von bestimmten einen oder mehreren Profilinformationen, die zumindest teilweise basierend auf Daten (z. B. Kapazitätsinformation, Erzeugungsinformationen, und Verbrauchsinformationen) von dem Haushalt bestimmt worden sind. Die bestimmten einen oder mehreren Profilinformationen können beispielsweise einen oder mehrere der folgenden Parameter i) bis iii) umfassen:

i) Energieverbrauch abgebildet über die Tageszeit;
ii) Grundlastverbrauch; und
iii) ein oder mehrere historisches Profile.

Die Profilanalyse visualisiert beispielsweise eine transparente und anschaulich zusammengefasste Darstellung von Stromerzeugungs- und Stromverbrauchsverhalten in einem Haushalt. Beispielsweise können eine oder mehrere Energieflüsse im Haushalt nach unterschiedlichen Zeit-Kategorien - wie beispielsweise Wochentagen - gebündelt dargestellt und/oder ausgewertet werden. Der Nutzer kann beispielsweise sein typisches Profil für einen bestimmten Wochentag einsehen und mit aktuellen und/oder historischen Daten vergleichen, um beispielsweise eine Optimierung hinsichtlich des Energieverbrauchs ermitteln zu können. Als Ergebnis können beispielsweise neue Energieverbraucher ermittelt werden, oder der Ersatz von einem Energieverbraucher durch einen moderneren Energieverbraucher kann hinsichtlich des tatsächlichen Energieverbrauchs bestätigt werden.

Die zuvor in dieser Beschreibung beschriebenen beispielhaften Ausgestaltungen sollen auch in allen Kombinationen miteinander offenbart verstanden werden. Insbesondere sollen beispielhafte Ausgestaltungen in Bezug auf die unterschiedlichen Aspekten offenbart verstanden werden.

Insbesondere sollen durch die vorherige oder folgende Beschreibung von Verfahrensschritten gemäß bevorzugter Ausführungsformen eines Verfahrens auch entsprechende Mittel zur Durchführung der Verfahrensschritte durch bevorzugte Ausführungsformen einer Vorrichtung offenbart sein. Ebenfalls soll durch die Offenbarung von Mitteln einer Vorrichtung zur Durchführung eines Verfahrensschrittes auch der entsprechende Verfahrensschritt offenbart sein.

Weitere vorteilhafte beispielhafte Ausgestaltungen sind der detaillierten Beschreibung einiger beispielhafter Ausführungsformen, insbesondere in Verbindung mit den Figuren, zu entnehmen. Die Figuren sollen jedoch nur dem Zwecke der Verdeutlichung, nicht aber zur Bestimmung des Schutzbereiches dienen. Die Figuren sind nicht maßstabsgetreu und sollen lediglich das allgemeine Konzept beispielhaft widerspiegeln. Insbesondere sollen Merkmale, die in den Figuren enthalten sind, keineswegs als notwendiger Bestandteil erachtet werden.

**Patentansprüche**

1. Verfahren, durchgeführt von einer oder mehreren Vorrichtungen (110,141-145, 300), umfassend:

- Erfassen von Erzeugungsinformationen indikativ für eine Menge von erzeugtem Strom, wobei der erzeugte Strom von einer Stromerzeugungsanlage (141) erzeugt wird;
- Erfassen von Verbrauchsinformationen indikativ für eine Menge von verbrauchtem Strom, wobei der Strom von einem Haushalt (140) verbraucht wird;
- Bestimmen von einer Kapazitätsinformation indikativ für eine Dimensionierung eines Energiespeichers, wobei die Kapazitätsinformation zumindest teilweise basierend auf den erfassten Erzeugungsinformationen und auf den erfassten Verbrauchsinformationen bestimmt wird;
- Ausgeben oder Veranlassen des Ausgebens der bestimmten Kapazitätsinformation; und
- Erfassen von Einspeiseinformationen indikativ für eine Menge von Strom, die in ein Stromnetz einspeisbar ist, wobei die Menge von Strom, die in das Stromnetz einspeisbar ist, von der Stromerzeugungsanlage (141) erzeugt wurde;

wobei das Bestimmen von der Kapazitätsinformation zumindest teilweise basierend auf den erfassten Einspeiseinformationen erfolgt;
**dadurch gekennzeichnet, dass** das Verfahren ferner umfasst:

- Bestimmen einer Freigabeinformation indikativ für einen Anteil der Kapazität des Energiespeichers, welcher zum Zwischenspeichern von elektrischer Energie von dem Stromnetz nutzbar ist, wobei die Freigabeinformation zumindest teilweise basierend auf der bestimmten Kapazitätsinformation bestimmt wird;
- Ausgeben oder Veranlassen des Ausgebens der bestimmten Freigabeinformation;
- Freigabe des Anteils der Kapazität des Energiespeichers für ein Zwischenspeichern von Strom aus dem Stromnetz; und
- Erfassen von Wechselrichterinformationen indikativ für Stromverluste, die bei einem Wandeln von dem von der Stromerzeugungsanlage (141) erzeugten Strom in einem von dem Haushalt (140) nutzbaren Strom auftreten;

wobei das Bestimmen der Kapazitätsinformation zumindest teilweise basierend auf den erfassten Wechselrichterinformationen erfolgt und
wobei zusätzlich eine Dimensionierung des Wechselrichters erfolgt.

2. Verfahren nach Anspruch 1, wobei das Bestimmen der Kapazitätsinformation das Bestimmen einer Ladezustandsinformation des Energiespeichers umfasst, wobei die Ladezustandsinformation indikativ für eine Menge von gespeichertem Strom in dem Energiespeicher ist.

3. Verfahren nach einem der vorhergehenden Ansprüche, wobei das Bestimmen der Kapazitätsinformation unter Berücksichtigung des Maximierens der Autarkie des Haushalts (140) erfolgt.

4. Verfahren nach einem der vorhergehenden Ansprüche, wobei das Bestimmen der Kapazitätsinformation unter Berücksichtigung des Minimierens eines Strombezugs aus dem Stromnetz erfolgt.

5. Verfahren nach einem der vorhergehenden Ansprüche, wobei die Kapazitätsinformation eine Größe eines Energiespeichers repräsentiert.

6. Verfahren nach einem der Ansprüche 2 bis 5, wobei das Bestimmen der Kapazitätsinformation zumindest teilweise basierend auf einem der folgenden Fälle i) bis iii) erfolgt:

   i) die Ladezustandsinformation repräsentiert einen Wert größer als 0% und eine bestimmte Differenz zwischen den Erzeugungsinformationen und den Verbrauchsinformationen ergibt, dass ein Bezug von Strom aus dem Stromnetz erfolgt;
   ii) die Ladezustandsinformation repräsentiert einen Wert kleiner als 100% und eine bestimmte Differenz zwischen den Erzeugungsinformationen und den Verbrauchsinformationen ergibt, dass eine Einspeisung von Strom in das Stromnetz erfolgt;
   iii) die Ladezustandsinformation repräsentiert einen Wert gleich 0% und eine bestimmte Differenz zwischen den Erzeugungsinformationen und den Verbrauchsinformationen ergibt, dass ein Bezug von Strom aus dem Stromnetz erfolgt, oder die Ladezustandsinformation repräsentiert einen Wert gleich 100% und eine bestimmte Differenz zwischen den Erzeugungsinformationen und den Verbrauchsinformationen ergibt, dass ein Bezug von Strom aus dem Stromnetz erfolgt;

   und das Bestimmen der Kapazitätsinformation ferner umfasst:

   - Bestimmen einer aktualisierten Ladezustandsinformation basierend auf dem entsprechend vorliegenden Fall i) bis iii).

7. Verfahren nach einem der vorhergehenden Ansprüche, wobei die Verbrauchsinformationen und/oder die Erzeugungsinformationen über ein vordefiniertes Zeitintervall erfasst werden.

8. Verfahren nach einem der vorhergehenden Ansprüche, wobei die stromerzeugende Anlage (141) eine Photovoltaikanlage oder eine Kraft-Wärme-Kopplungsanlage ist.

9. Verfahren nach einem der vorhergehenden Ansprüche, wobei die Erzeugungsinformationen und die Verbrauchsinformationen von einem Stromzähler (145) erfasst werden.

10. System (100), umfassend eine oder mehrere Vorrichtungen (110, 141-145, 300), welche zusammen dazu ausgebildet und/oder eingerichtet sind, ein Verfahren nach einem der Ansprüche 1 bis 9 auszuführen,

- wobei das System (100) einen Server (110), eine in einem Haushalt (140) angeordnete Stromerzeugungsanlage (141) und ein in dem Haushalt (140) angeordnetes Smartmeter (145) und eine Vorrichtung (300) umfasst.

**Claims**

1. A method performed by one or more apparatuses (110, 141-145, 300) comprising:

   - obtaining generation information indicative of an amount of generated electricity, wherein the generated electricity is generated by an electricity generating facility (141);
   - obtaining consumption information indicative of a quantity of consumed electricity, the electricity being consumed by a household (140);
   - determining capacity information indicative of dimensioning of an energy storage device, wherein the capacity information is determined based at least in part on the obtained generation information and on the obtained consumption information;
   - outputting or causing to be output the determined capacity information; and
   - obtaining feed-in information indicative of an amount of electricity that is feedable into a power grid, wherein the amount of electricity that is feedable into the power grid was generated by the electricity generating facility (141);

   wherein the determining of the capacity information is based at least in part on the obtained feed-in information;
   **characterised in that** the method further comprises:

   - determining release information indicative of a portion of the capacity of the energy storage device that is usable for temporarily storing electrical energy from the power grid, wherein the release information is determined based at least in part on the determined capacity information;
   - outputting or causing to be output the specific release information;
   - releasing of the portion of the capacity of the energy storage device for intermediate storage of electricity from the power grid; and
   - obtaining inverter information indicative of power losses that occur when converting electricity generated by the electricity generating facility (141) into electricity usable by the household (140);

   wherein the determining of the capacity information is based at least in part on the obtained inverter information, and
   wherein an additional dimensioning of the inverter takes place.

2. The method of claim 1, wherein the determining of the capacity information comprises determining a state of charge information of the energy storage device, the state of charge information being indicative of an amount of stored electricity in the energy storage device.

3. The method according to any one of the preceding claims, wherein the determining of the capacity information is performed taking into account maximising the self-sufficiency of the household (140).

4. The method according to any one of the preceding claims, wherein the determining of the capacity information is performed taking into account the minimisation of a current electricity draw from the power grid.

5. The method according to any one of the preceding claims, wherein the capacity information represents a size of an energy storage device.

6. The method according to any one of claims 2 to 5, wherein the determining of the capacity information is based at least in part on any one of the following cases i) to iii):

   i) the state of charge information represents a value greater than 0% and a certain difference between the generation information and the consumption information indicates in a electricity drawing from the power grid;
   ii) the state of charge information represents a value lower than 100% and a certain difference between the generation information and the consumption information indicates in electricity being fed into the power grid;
(iii) the state of charge information represents a value equal to 0% and a certain difference between the generation information and the consumption information indicates that electricity is being drawn from the power grid, or the state of charge information represents a value equal to 100% and a certain difference between the generation information and the consumption information indicates that electricity is being drawn from the power grid;

and the determining of the capacity information further comprises:

- determining of an updated state of charge information based on the corresponding present case i) to iii).

7. The method according to any of the preceding claims, wherein the consumption information and/or the generation information are obtained over a predefined time interval.

8. The method according to any one of the preceding claims, wherein the electricity generating facility (141) is a photovoltaic plant or a combined heat and power plant.

9. The method according to any of the preceding claims, wherein the generation information and the consumption information are obtained by an electricity meter (145).

10. A system (100) comprising one or more apparatuses (110, 141-145, 300) which together are configured and/or adapted to perform a method according to any one of claims 1 to 9,

- wherein the system (100) comprises a server (110), a electricity generating facility (141) located in a household (140), and an electricity meter (145) located in the household (140) and an apparatus (300).

**Revendications**

1. Procédé mis en œuvre par un ou plusieurs dispositifs (110, 141-145, 300), comprenant

- acquérir des informations de production indicatives d'une quantité de courant électrique produite, le courant électrique produit étant produit par une installation de production de courant électrique (141) ;
- acquérir des informations de consommation indicatives d'une quantité de courant électrique consommée, le courant électrique étant consommé par un ménage (140) ;
- déterminer une information de capacité indicative d'un dimensionnement d'un dispositif de stockage d'énergie, l'information de capacité étant déterminée au moins en partie sur la base des informations de production acquises et des informations de consommation acquises ;
- émettre ou faire émettre les informations de capacité déterminées ; et
- acquérir des informations d'injection indicatives d'une quantité de courant électrique pouvant être injectée dans un réseau électrique, la quantité de courant électrique pouvant être injectée dans le réseau électrique ayant été produite par l'installation de production de courant électrique (141) ;

la détermination de l'information de capacité étant effectuée au moins en partie sur la base des informations d'injection acquises ;
**caractérisé en ce que** le procédé comprend en outre

- déterminer une information d'autorisation indicative d'une partie de la capacité du dispositif de stockage d'énergie qui est utilisable pour le stockage temporaire d'énergie électrique du réseau électrique, dans lequel l'information d'autorisation est déterminée au moins en partie sur la base de l'information de capacité déterminée ;
- émettre ou faire émettre l'information d'autorisation déterminée ;
- donner une autorisation pour part de la capacité du dispositif de stockage d'énergie pour un stockage intermédiaire du courant électrique provenant du réseau électrique ; et
- acquérir des informations d'onduleur indicatives de pertes de courant qui se produisent lors de la conversion du courant électrique généré par l'installation de production de courant électrique (141) en un courant électrique utilisable par le ménage (140) ;

la détermination des informations de capacité étant basée au moins en partie sur les informations d'onduleur acquises, et

un dimensionnement de l'onduleur étant en outre effectué.

2. Procédé selon la revendication 1, dans lequel la détermination de l'information de capacité comprend la détermination d'une information d'état de charge du dispositif de stockage d'énergie, l'information d'état de charge étant indicative d'une quantité de courant électrique stockée dans le dispositif de stockage d'énergie.

3. Procédé selon l'une des revendications précédentes, dans lequel la détermination de l'information de capacité est effectuée en tenant compte de la maximisation de l'autosuffisance du ménage (140).

4. Procédé selon l'une des revendications précédentes, dans lequel la détermination de l'information de capacité est effectuée en tenant compte de la minimisation d'un prélèvement de courant électrique sur le réseau électrique.

5. Procédé selon l'une des revendications précédentes, dans lequel l'information de capacité représente une grandeur d'un dispositif de stockage d'énergie.

6. Procédé selon l'une des revendications 2 à 5, dans lequel la détermination de l'information de capacité est au moins partiellement basée sur l'un des cas i) à iii) suivants :

   i) l'information d'état de charge représente une valeur supérieure à 0% et une différence déterminée entre les informations de production et les informations de consommation indique qu'un prélèvement de courant électrique sur le réseau électrique a lieu ;
   ii) l'information d'état de charge représente une valeur inférieure à 100 % et une différence déterminée entre les informations de production et les informations de consommation indique qu'il y a injection de courant électrique dans le réseau électrique ;
   iii) l'information d'état de charge représente une valeur égale à 0% et une différence déterminée entre les informations de production et les informations de consommation indique qu'un prélèvement de courant électrique sur le réseau électrique a lieu, ou l'information d'état de charge représente une valeur égale à 100% et une différence déterminée entre les informations de production et les informations de consommation indique qu'un prélèvement de courant électrique sur le réseau électrique a lieu ;

   et la détermination des informations de capacité comprend en outre

   - déterminer une information d'état de charge mise à jour, sur la base du cas i) à iii) correspondant.

7. Procédé selon l'une des revendications précédentes, dans lequel les informations de consommation et/ou les informations de production sont acquises sur un intervalle de temps prédéfini.

8. Procédé selon l'une des revendications précédentes, dans lequel l'installation de production de courant électrique (141) est une installation photovoltaïque ou une installation de cogénération force-chaleur.

9. Procédé selon l'une quelconque des revendications précédentes, dans lequel les informations de production et les informations de consommation sont acquises par un compteur de courant électrique (145).

10. Système (100) comprenant un ou plusieurs dispositifs (110, 141-145, 300) qui, ensemble, sont conçus et/ou configurés pour mettre en œuvre un procédé selon l'une quelconque des revendications 1 à 9,

   - dans lequel le système (100) comprend un serveur (110), une installation de production de courant électrique (141) disposée dans un ménage (140) et un compteur intelligent (145) disposé dans le ménage (140), et un dispositif (300).

Fig.1

Fig.2

Fig.3

410

411

412

413

414

415

416

Fig.4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2610986 A1

**In der Beschreibung aufgeführte Nicht-Patentliteratur**

- **JANINA MOSHÖVEL et al.** Tool to Determine Economic Capacity Dimensioning in PV Battery Systems Considering Various Design Parameters. *30th-31th European Photovoltaic Solar Energy Conference, Proceedings of the 30-31th international Conference,* 18. September 2015